# EUROPÄISCHE PATENTSCHRIFT

(11) **EP 1 123 228 B1**
(45) Veröffentlichungstag und Bekanntmachung des Hinweises auf die Patenterteilung: **15.11.2006**
(21) Anmeldenummer: 00963886.7
(22) Anmeldetag: 08.08.2000
(51) Int. Cl.: B60S 1/40

(54) **VERBINDUNGSSTÜCK ZUM VERBINDEN EINES WISCHBLATTS MIT EINEM WISCHERARM**
CONNECTING PIECE FOR CONNECTING A WIPER BLADE TO A WIPER ARM
PIECE DE LIAISON POUR ASSEMBLER UNE RACLETTE D'ESSUIE-GLACE AVEC UN BRAS D'ESSUIE-GLACE

(30) Priorität: 31.08.1999 DE 19941499
(43) Veröffentlichungstag der Anmeldung: 16.08.2001
(73) Patentinhaber: ROBERT BOSCH GMBH, 70442 Stuttgart (DE)
(72) Erfinder: WESTERMANN, Klaus-Juergen, 76316 Malsch (DE); ROEKENS, Jurgen, B-1820 Steenokkerseel (BE); HERINCKX, Dirk, B-3350 Drieslinter (BE)
(86) Internationale Anmeldenummer: PCT/DE2000/002636
(87) Internationale Veröffentlichungsnummer: WO 2001/015945

(56) Entgegenhaltungen:
- EP-A- 0 585 811
- EP-A- 0 694 459
- DE-A- 19 618 307
- FR-A- 2 786 449
- GB-A- 2 322 069

## Beschreibung

### Stand der Technik

Die Erfindung geht aus von einem Verbindungsstück zum Verbinden eines Wischblattes und eines Wischerarms nach dem Oberbegriff des Anspruchs 1.

Es sind bereits Verbindungsstücke zum Verbinden des Wischerarms mit dem Wischblatt, beispielsweise aus der EP -A-0 863 058 A2, bekannt geworden, jedoch ist das dort vorgestellte Verbindungsstück mehrteilig ausgestaltet, so daß für die unterschiedlich dimensionierten Wischerarme jeweils unterschiedliche Adapterteile verwendet werden.

Aus der EP-A-0585811 ist ein Verbindungsstück mit den Merkmalen der Oberbegriffe der Ansprüche 1 und 5 bekannt.

### Vorteile der Erfindung

Das erfindungsgemäße Verbindungsstück mit den kennzeichnenden Merkmalen des Hauptanspruches hat dem gegenüber den Vorteil, daß es durch elastische Bereiche einen autoadaptiven Charakter aufweist, und so für eine Vielzahl unterschiedlich dimensionierter Wischerarme verwendbar ist. Darüber hinaus kann es einstückig, beispielsweise in einem Spritzgußverfahren, hergestellt werden, wodurch sich ein wesentlicher Vorteil bei der Montage ergibt, da nicht erst bestimmt werden muß, welches Adapterstück für das jeweilige Wischerarmende passend ist. Dies ist insbesondere deshalb von besonderer Wichtigkeit, da die Montage im Regelfall vom Fahrzeugführer selbst, also von einem Laien und nicht von einem Fachmann durchgeführt wird.

Durch die in den Unteransprüchen aufgeführten Maßnahmen ergeben sich vorteilhafte Weiterbildungen und Verbesserungen des im Hauptanspruch angegebenen Verbindungsstücks.

Besonders vorteilhaft ist es, wenn die elastischen Bereiche in Form federnder Laschen ausgeformt sind, da so das Verbindungsstück so zerstörungsfrei an das Wischerarmende montiert werden kann. Dadurch, daß die federnden Laschen mehrere Anschlagflächen aufweisen, die unterschiedlich dimensionierten Wischerarmenden entsprechen und welche sich bei der Montage jeweils automatisch in die richtige Position begeben, ergibt sich eine autoadaptive Charakteristik, welche eine fehlerfreie Montage wesentlich erleichtert.

Ist ein Bereich als nachgiebiges Plateau ausgebildet, ergibt sich eine hohe Torsionsstabilität kombiniert mit einer hohen Maßtoleranz.

Wird die Nachgiebigkeit des Plateaus durch Stege, welche einen Winkel zum Wischerarm von weniger als 90° aufweisen, verursacht, ergibt sich beim Entfernen des Verbindungsstücks vom Wischerarm ein selbstarretierender Effekt, welcher die Verbindungsstärke zwischen Wischerarm und Wischblatt weiter erhöht.

Ist das Verbindungsstück mit einem federnden Bereich für mehrere Stellungen versehen, die verschieden dimensionierten Wischerarmenden zugeordnet sind, so erweist es sich als besonders vorteilhaft, wenn im federnden Bereich in jeder dieser Positionen durch Stabilisierungselemente eine stützende Wirkung auf den Wischerarm ausgeübt wird.

Dadurch, daß zur Arretierung des Verbindungsstücks mit dem Wischblatt der Körper oder die Mittel zum Aufnehmen und Abstützen des Wischblattes elastische Überstände aufweisen, an denen sich Erhebungen senkrecht zur Richtung des Wischarmendes befinden, ist durch die Größe der Erhebungen die Kraft zum Anbringen und Entfernen des Verbindungsstückes vom Wischerarm leicht und präzise einstellbar.

### Zeichnungen

Nachstehend ist die Erfindung anhand eines Ausführungsbeispiels mit zugehörigen Zeichnungen erläutert.

Es zeigen:
Figur 1 ein erfindungsgemäßes Verbindungsstück in Einbaulage in einer schematischen Darstellung,
Figur 1a einen Ausschnitt aus einem Wischblatt mit Befestigungselement und ein Wischerarmende in perspektivischer Darstellung,
Figur 2 und 3 ein erfindungsgemäßes Verbindungsstück in perspektivischer Darstellung,
Figur 4 eine Seitenansicht eines erfindungsgemäßen Verbindungsstücks,
Figur 5 einen Schnitt durch ein erfindungsgemäßes Verbindungsstück,
Figur 6 eine Ansicht von Unten auf ein erfindungsgemäßes Verbindungsstück,
Figur 7 eine Seitenansicht eines erfindungsgemäßen Verbindungsstücks an einem schmalen Wischerarmende mit kleinem Biegeradius montiert und
Figur 8 eine Draufsicht auf ein erfindungsgemäßes Verbindungsstück mit einem schmalen Wischerarmende.
Figur 9 einen Schnitt durch ein erfindungsgemäßes Verbindungsstück mit einem schmalen Wischerarmende,
Figur 10 eine Seitenansicht eines erfindungsgemäßen Verbindungsstücks an einem breiten Wischerarmende mit kleinem Biegeradius montiert,
Figur 11 eine Draufsicht auf ein erfindungsgemäßes Verbindungsstück mit einem breiten Wischerarmende.
Figur 12 eine Seitenansicht eines erfindungsgemäßen Verbindungsstücks an einem Wischerarmende mit großem Biegeradius,
Figur 13 einen Schnitt durch ein erfindungsgemäßes Verbindungsstück mit einem breiten Wischerarmende und großem Biegeradius und
Figur 14 einen Schnitt durch einen Teil eines erfindungsgemäßen Verbindungsstücks in einer Variante.
Figur 15 ein erfindungsgemäßes Verbindungsstück.

### Beschreibung des Ausführungsbeispiels

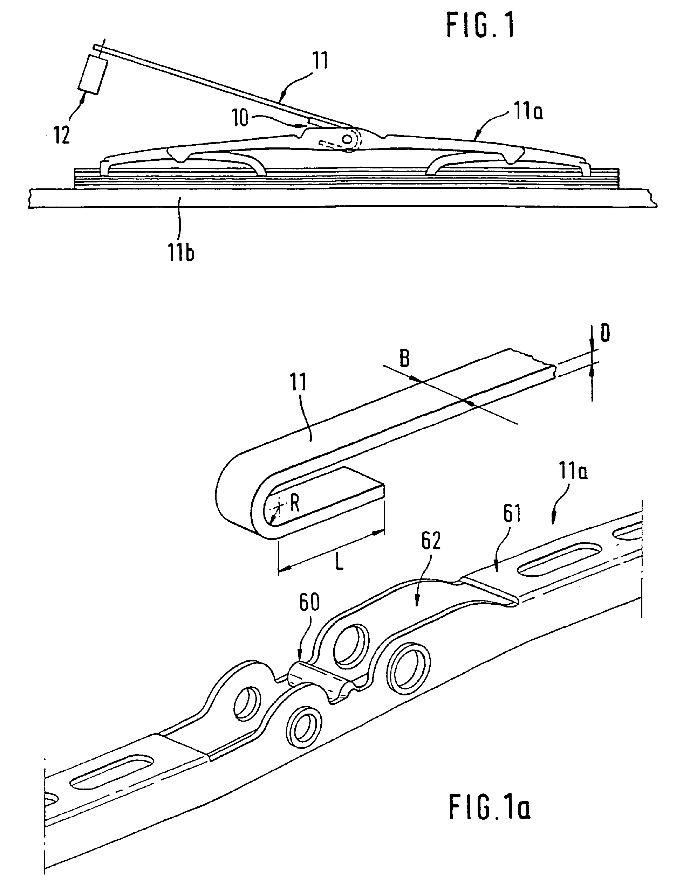

In Figur 1 ist ein Verbindungsstück 10 mit einem Wischerarm 11 und einem Wischblatt 11a zu sehen. Der Wischerarm 11 hat zwei Enden, wobei sein unteres Ende mit einem Wischermotor 12 verbunden ist und sein oberes Ende hakenartig um 180° umgebogen ist. Das Wischblatt 11a stützt sich auf einer Windschutzscheibe 11b ab.

In Figur 1a ist das obere Ende des Wischerarms 11 und ein Ausschnitt des Wischblattes 11a gezeigt. Das Ende des Wischarms 11 mit der Dicke D und der Breite B, weist eine hakenartige 180°-Biegung vom Radius R auf. Der abgebogene Abschnitt hat die Länge L. Das Wischblatt 11a trägt eine quer zu seiner Längsachse verlaufende zylindrische Achse 60, mit der es drehbar am Wischerarm 11 lagerbar ist.

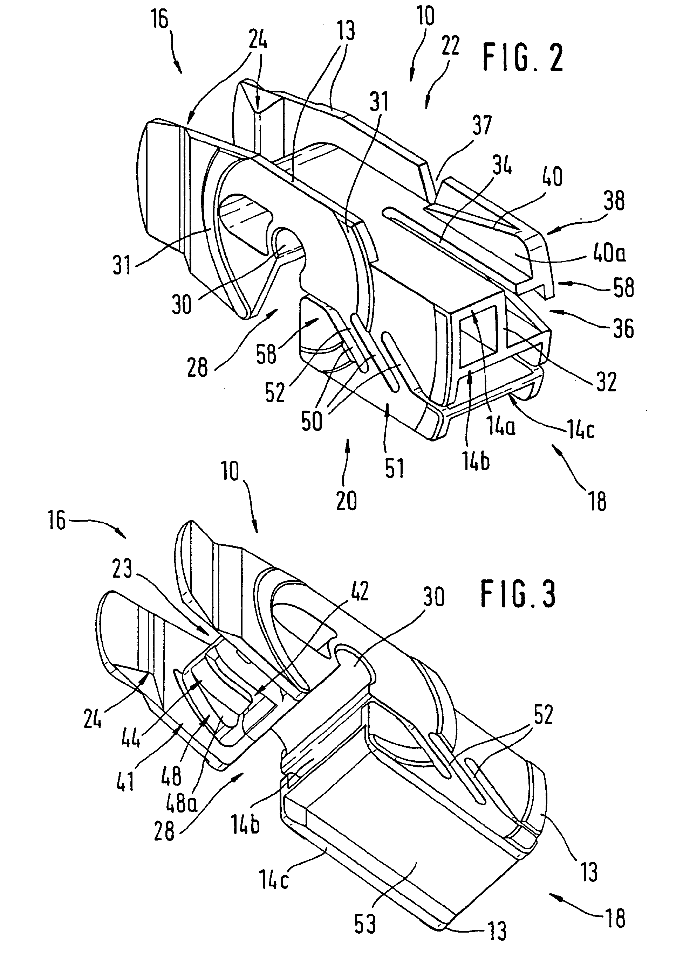

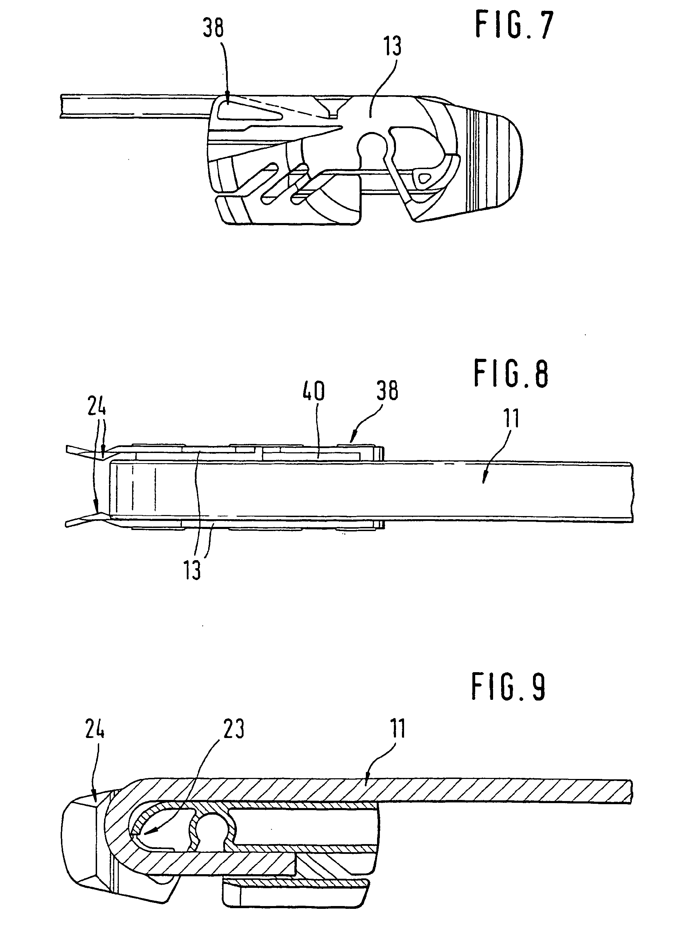

In den Figuren 2 und 3 ist ein Ausführungsbeispiel des erfindungsgemäßen Verbindungsstücks 10 detailliert dargestellt. Es besteht im wesentlichen aus einem Hohlkörper, mit zwei seitlichen Wänden 13, welche drei Querwände, einer oberen, einer mittleren und einer unteren Fläche 14a,14b,14c, seitlich begrenzen. Die Wände 13 stehen dabei oben und unten über die drei Querwände bzw. Flächen 14a, 14b und 14c hinaus, wobei sich das Wischblatt 11a in Montageposition an den Außenflächen der Wände 13 abstützt (Figuren 7 und 9).

In Einbaulage am Wischerarm 11 weist das Verbindungsstück 10 ein dem Wischermotor 12 abgewandtes vorderes Ende 16 auf, in dessen Richtung sich die Wände 13 verjüngen. Außerdem weist das Verbindungsstück 10 ein dem Wischermotor 12 zugewandtes hinteres Ende 18, eine der Windschutzscheibe 11b zugewandte Unterseite 20 und eine der Windschutzscheibe 11b abgewandte Oberseite 22 auf.

Auf seiner Unterseite 20 weist das Verbindungsstück 10 eine durchgehende Quernut 28 auf, die sich über dessen Breite erstreckt. Die Quernut 28 bildet in den Wänden 13 schlüssellochartige Aussparungen 28, welche in je eine kreisförmige Aussparung 30 übergehen. Die Quernut 28 erstreckt sich bis zur obersten Querwand mit der oberen Fläche 14a hin. Den Nutgrund der Quernut 28 bildet einen Teil-Hohlzylinder zum übergreifen der Achse 60.

An den Außenseiten der Wände 13 befindet sich jeweils eine erhabene ringförmige Anlagefläche 31 konzentrisch zur Mitte der kreisförmigen Aussparungen 30.

Zwischen den Wänden 13 und parallel zu diesen sind am hinteren Ende 18 die Querwände der oberen Fläche 14a und der mittleren Fläche 14b durch eine Stützwand 32 verbunden, entlang derer die oberste Fläche 14a eine längliche Aussparung 34 aufweist. Dadurch bilden die Querwände der Flächen 14a,b, die Stützwand 32 und die linke Wand 13 ein Hohlprofil mit rechteckigem Querschnitte.

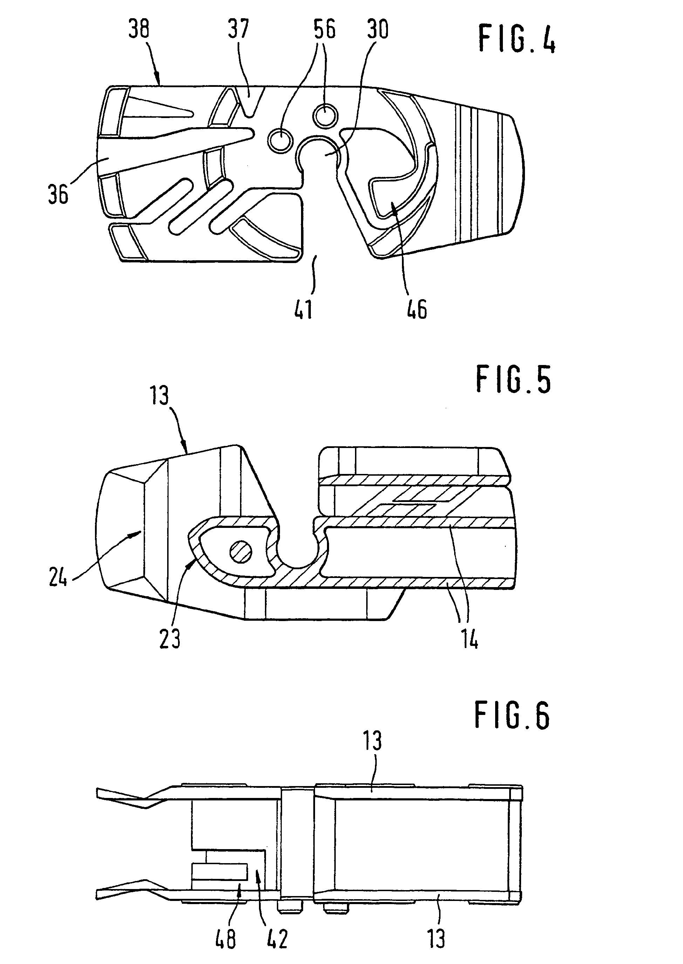

In der rechten Wand 13 befindet sich im Bereich der länglichen Aussparung 34 eine sich zum hinteren Ende 18 hin öffnende keilförmige Aussparung 36. Sie erstreckt sich vom hinteren Ende 18 bis nahe an die kreisförmige kreisförmige Aussparung 30 (Figur 4).

Am Ende der keilförmigen Aussparung 36 trägt die rechte Wand 13 einen keilförmigen Einschnitt 37. Dieser öffnet sich nach oben und beginnt an der Berührungsstelle der Wand 13 mit der obersten Fläche 14a.

Dadurch entsteht ein, vom hinteren Ende 18 aus betrachtet umgekehrt L-förmiger, erster nachgiebiger Bereich in Form einer federnden Lasche 38. An dieser federnden Lasche 38 befindet sich auf der, der länglichen Aussparung 34 zugewandten Seite der Wand 13, ein keilförmigen erster Ansatz 40, der eine erste seitliche Anschlagfläche 40a bildet.

Wie in Figur 4 gezeigt, befinden sich nahe der kreisförmigen Aussparung 30, an einer der Wände 13 zwei senkrecht zur Wand 13 stehende Zapfen 56.

Wie Figur 5 zeigt, ist die oberste Fläche 14a mit der mittleren Fläche 14b im Bereich des vorderen Endes 16 über einen Radius 23 verbunden. Am vorderen Ende 16 des Verbindungsstückes 10 befinden sich an den Wänden 13 gegenüberliegend nach innen gerichtete Erhebungen 24.

Am Radius 23 des Verbindungsstückes 10 ist, wie in den Figuren 3,4 und 6 dargestellt, ein zweiter nachgiebiger Bereich 41 angeordnet. Die Wand 13 an dieser Stelle ist, wie Figur 4 zeigt, so ausgespart, daß sich ein Abschnitt 44 des Radius 23 zusammen mit einem Überstand 46 der Wand 13 elastisch nach oben biegen läßt. Die mittlere Fläche 14b weist eine, von der Unterseite 20 aus betrachtet, umgekehrt L-förmige Ausnehmung 42 im Bereich des Radius 23 auf. Am Überstand 46 der Wand 13 befindet sich darüber hinaus noch ein weiterer seitlicher Ansatz 48, der eine zweite Anschlagfläche 48a bildet.

Die Querwand der unterste Fläche 14c, die sich vom hinteren Ende 18 bis zur Quernut 28 erstreckt, ist wie in den Figuren 2 und 4 zu sehen, ebenfalls nachgiebig und bildet einen dritten elastischen Bereich 49. Dazu weisen die beiden Wände 13, schräge Schlitze 50 derart auf, daß die Wandabschnitte 51 welche die unterste Fläche 14c tragen, lediglich durch dünne, blattfederartige schräge Stege 52 mit den Wänden 13 verbunden sind. So kann die unterste Fläche 14c, als nachgiebiges Plateau 53 parallel in Richtung der mittleren Fläche 14b verschoben werden.

In folgenden Abschnitten wird die Funktion des Verbindungsstückes 10 erläutert.

Der Wischerarm 11 weist, wie in Figur 1a dargestellt, an seinem dem Wischermotor 12 abgewandten Ende üblicherweise einen um 180° gebogenen Abschnitt auf. Je nach Ausführungsart des Wischerarms 11 kann die Biegung unterschiedliche Radien R und Länge L aufweisen. Ebenfalls variabel ist die Dicke D des Wischerarms 11.

Das Wischblatt 11a weist an der zur Verbindung mit dem Wischerarm 11 vorgesehenen Stelle ein als Achse dienendes Befestigungselement 60, häufig ein Niet oder Rollniet, auf. Das Verbindungsstück 10 wird auf dieses Befestigungselement 60 mit seiner Quernut 28 aufgesteckt, so daß das Befestigungselement 60 in den kreisförmigen Aussparungen 30 einrastet.

Besitzt der Wischerarm 11 eine Breite B, die dem Abstand zwischen der Wand 13, welche der Lasche 38 abgewandt ist und der ersten Anschlagfläche 40a der Lasche 38 entspricht, so wird der Wischerarm 11 nach dem Einschieben des Verbindungsstücks 10, zwischen die erste Ansschlagfläche 40a und der gegenüberliegenden Wand 13 auf der Oberseite, sowie vom zweiten Ansatz 48, der sich auf der selben Seite wie der erste Ansatz 40 befindet, und der gegenüberliegenden Wand gehalten. Je nach Radius R der Biegung des Wischerarms 11, kann das abgebogene Stück L des Wischerarms 11 entweder zwischen die mittlere Fläche 14b und die untere Fläche 14c, oder zur Anlage unter die unterste Fläche 14c des Verbindungsstückes 10 gelangen. Dies ist in den Figuren 7 und 8 dargestellt.

Die überrastende Arretierung des Verbindungsstückes 10 mit dem Wischerarm 11 wird durch die Erhebungen 24 verursacht, die als Teil von federnden Zungen, das Verbindungsstück 10 gegen den Radius 23 drücken. Durch die Dreiecksform der Erhebung 24 werden verschiedenste Wischerarmdicken D kraftschlüssig, überrastend spannbar. Dies ist in Fig. 9 dargestellt.

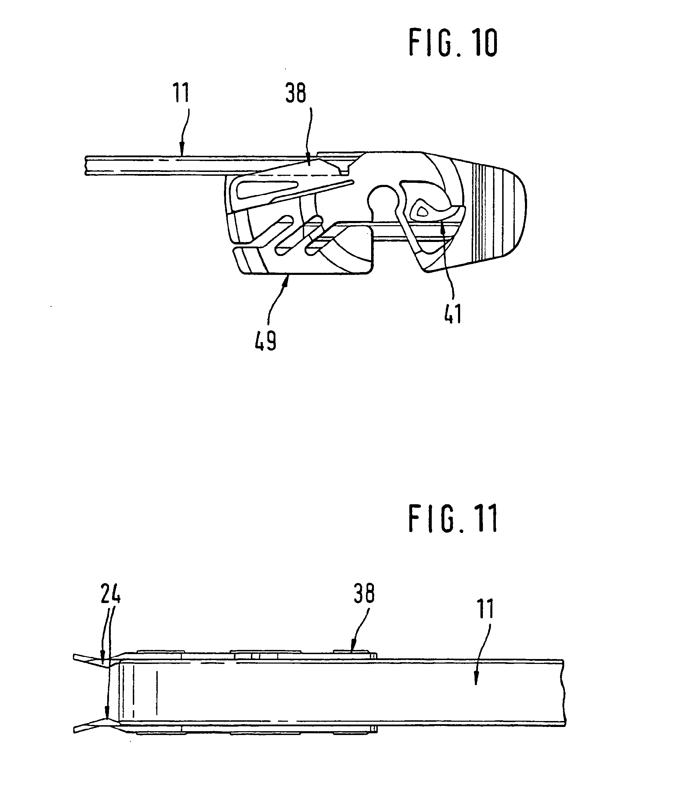

Ist die Breite B des Wischerarms 11 größer als der lichte Abstand zwischen der Anschlagfläche 40a und der gegenüberliegenden Wand 13, so wird beim Aufziehen des Verbindungsstückes 10 auf den Wischerarm 11 automatisch die federnde Lasche 38 durch den keilförmigen Ansatz 40 nach unten gedrückt und direkt durch das über die schiefe Ebene des Ansatzes 40 hinausstehende Stück der Wand 13 gehalten. Ebenso wird der zweite nachgebende Bereich 41 durch den zweiten Ansatz 48 (Figuren 3 und 4) abgebogen, so daß zusätzlich zur Arretierung zwischen Radius 23 und Erhebung 24 des Verbindungsstückes eine Klemmspannung zwischen dem zweiten nachgebenden Bereich 41 und der obersten Fläche 14a entsteht. Ist der Radius R des Wischerarmes 11 jedoch so groß, daß das abgebogene Ende nicht zwischen mittlere Fläche 14b und unterste Fläche 14c eingeschoben wird, sondern unter die unterste Fläche 14c schlüpft, so wird der zweite nachgebende Bereich 41 nicht abgebogen. In diesem Fall kann eine zusätzliche Klemmspannung durch den dritten nachgebenden Bereich 49, indem die unterste Fläche 14c als nachgiebiges Plateau 53 ausgebildet ist, verursacht werden. Dies ist in den Figuren 10 bis 13 dargestellt.

Die Richtung der Schlitze 50 und damit die Richtung Stege 52 ist zweckmäßigerweise so gewählt, daß zum Entfernen des Verbindungsstückes 10 aus dem Wischerarm 11 zunächst ein Widerstand überwunden werden muß, indem die Reibung des Wischerarmes 11 an der untersten Fläche 14c eine Vergrößerung des Anpreßdruckes der unteren Fläche 14c an den Wischerarm 11 bewirkt. Dies wird dadurch erreicht, daß beim Herausziehen des Verbindungsstücks 10 aus dem Wischerarm 11 die unterste Fläche 14c am Wischerarm 11 ein wenig haftet, wodurch ein aufrichtendes Moment an die Stege 52 wirkt. Die Stege 52 zum Wischerarm 11 werden steiler aufgerichtet wodurch der Abstand zwischen der oberen Fläche 14a und der unteren Fläche 14c größer wird, was den Anpressdruck erhöht.

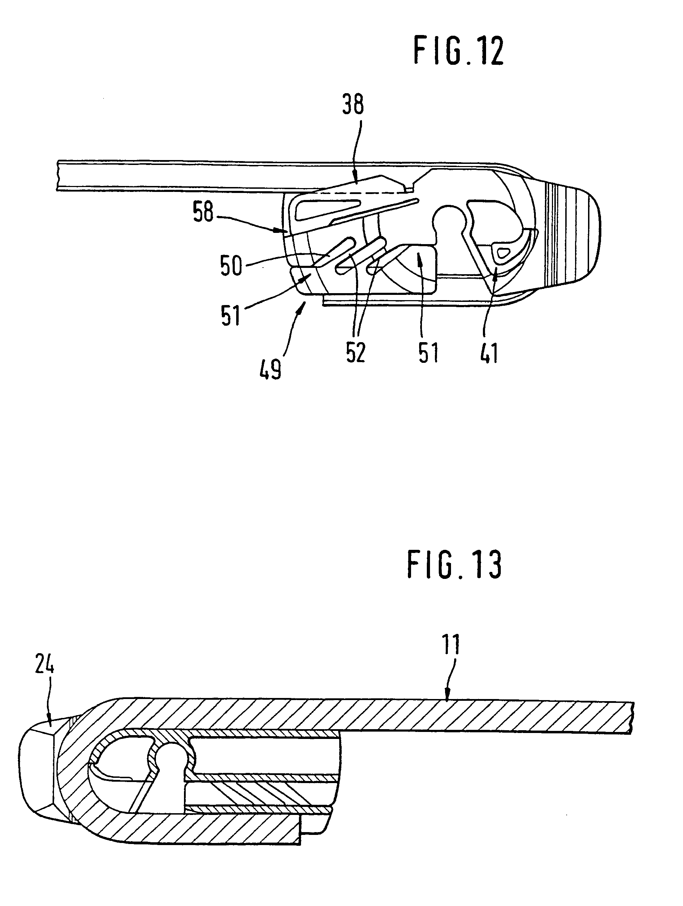

Die nachgebenden Bereiche 38, 41 und 49 weisen zur Begrenzung der Nachgiebigkeit Stabilisierungselemente 58 auf, welche in Figur 12 dargestellt sind. So ist die Aussparung 36 derart ausgeformt, daß genau dann wenn die schiefe Ebene des Ansatzes 40 sich mit der oberen Fläche 14 in einer Ebene befindet, also die Lasche 38 zur Unterseite 20 hin abgeklappt ist, das Stabilisierungselement 58 an einer Stelle an die Wand 13 oder an eine Fläche 14 anschlägt. Beim dritten elastischen Bereich 49 sind analog dazu die Wandabschnitte 51 so ausgeformt, daß ein maximaler Verstellweg vorgebbar ist. Auf diese Weise sind die Stege 52 vor einer zu großen Belastung und damit vor einem Bruch geschützt.

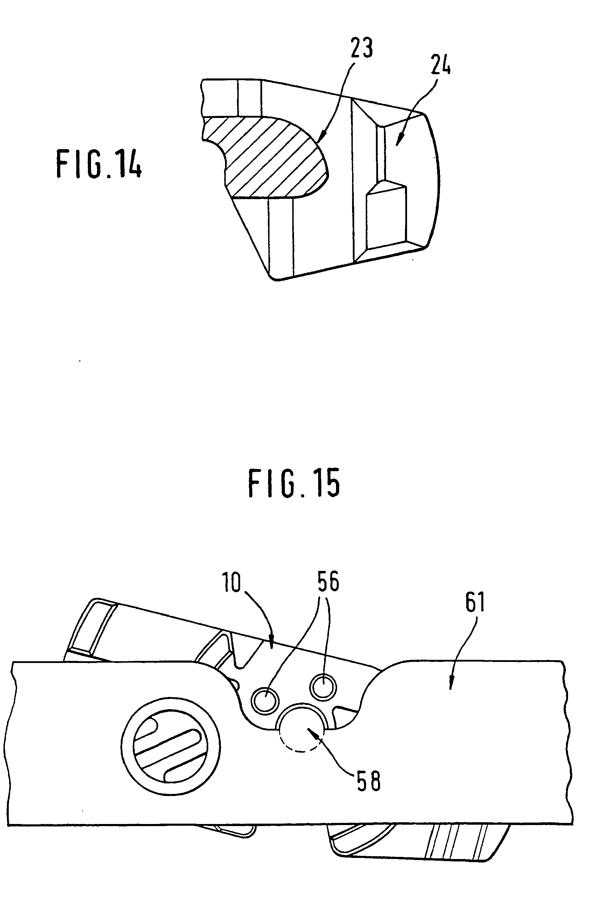

Die Erhebungen 24 an den federnden Zungen der Wände 13 müssen sich nicht über die gesamte Höhe des Verbindungsstücks erstrecken. Beispielsweise kann, wie in Figur 14 zu sehen, die Erhebung 24 sich nur über einen Teil der Wand 13 erstrecken, wodurch sich die zur Montage benötigte Kraft einstellen läßt.

Um den möglichen Drehwinkel des Wischblattes 11a gegenüber dem Wischerarm 11 zu begrenzen, sind im Bereich der kreisförmigen Aussparungen 30, in der sich das Wischblatt 11a dreht, zwei sich senkrecht aus der Wand 13 heraus erstreckende zapfenartige Elemente 56 angeordnet. Wie in Figur 1a gezeigt, erfolgt die Anordnung dabei so, daß bei erreichen des maximal gewünschten Drehwinkels eine Berandung des Kastenbereichs 62 des Wischerblatt 11a, in dem sich das Verbindungsstück 10 dreht, an einem der Elemente 56 anschlägt. Zur Montage des Wischblattes 11a muß das Verbindungsstück 10 nicht aus dem Kastenbereich 62 des Mittelbügels 61 des Wischblatts 11a gedreht werden.

## Patentansprüche

1. Verbindungsstück (10) zum Verbinden eines Wischblatts (11a) mit einem Wischerarm (11), mit einem insbesondere das Ende des Wischerarms (11) aufnehmenden Körper und mit Mitteln zum Aufnehmen und Abstützen des Wischblatts, wobei am Körper und/oder an den Mitteln zum Aufnehmen und Abstützen des Wischblatts Bereiche (38,41,49) vorgesehen sind, die zum Zwecke des Form- und/oder Toleranzausgleichs nachgiebig ausgeformt sind, wobei das Verbindungsstück (10) einstückig ausgebildet ist und für eine Vielzahl unterschiedlich dimensionierter Wischerarme verwendbar ist, **dadurch gekennzeichnet, dass** zum Erzielen einer autoadaptiven Charakteristik mindestens ein nachgiebiger Bereich (38,41,49) als federnde Lasche (38) ausgebildet ist.

2. Verbindungsstück nach Anspruch 1 oder 2, **dadurch gekennzeichnet, dass** die federnde Lasche (38) mindestens zwei Flächen (40a, 13) aufweist, die Anschläge zu unterschiedlich dimensionierten Wischarmenden (11) bilden und bei der Montage jeweils überführbar sind.

3. Verbindungsstück nach Anspruch 2, **dadurch gekennzeichnet, dass** die federnde Lasche (38) in abgeklappter Position durch mindestens ein Stabilisierungselement (58) gestützt ist.

4. Verbindungsstück nach Anspruch 3, **dadurch gekennzeichnet, dass** wenigstens eine federnde Lasche als gekrümmter Abschnitt (41) ausgebildet ist.

5. Verbindungsstück (10) zum Verbinden eines Wischblatts (11a) mit einem Wischerarm (11), mit einem insbesondere das Ende des Wischerarms (11) aufnehmenden Körper und mit Mitteln zum Aufnehmen und Abstützen des Wischblatts, wobei am Körper und/oder an den Mitteln zum Aufnehmen und Abstützen des Wischblatts Bereiche (38,41,49) vorgesehen sind, die zum Zwecke des Form- und/oder Toleranzausgleichs nachgiebig ausgeformt sind, wobei das Verbindungsstück (10) einstückig ausgebildet ist und für eine Vielzahl unterschiedlich dimensionierter Wischerarme verwendbar ist, **dadurch gekennzeichnet, dass** mindestens ein Bereich (49) als nachgiebiges Plateau (53) ausgebildet ist, so dass ein autoadaptiver Charakter erzielt ist.

6. Verbindungsstück nach einem der vorhergehenden Ansprüche, **dadurch gekennzeichnet, dass** die Mittel zum Aufnehmen und Abstützen des Wischblattes (11a) Schlitze (50) aufweisen, derart dass eine federnde Querschnittsstruktur entsteht, die die Form mindestens eines Steges (52) aufweist.

7. Verbindungsstück nach Anspruch 1, **dadurch gekennzeichnet, dass** das Plateau (53) eine Richtung definiert zu der mindestens ein Steg (52) einen Winkel kleiner 90° aufweist.

8. Verbindungsstück nach einem der vorhergehenden Ansprüche, **dadurch gekennzeichnet, dass** der Körper und/oder die Mittel zum aufnehmen und abstützen des Wischblatts (11a) wenigstens einen elastischen Überstand mit mindestens einer Erhebung (24) zur Arretierung des Wischerarms (11) aufweist.

9. Verbindungsstück nach einem der vorhergehenden Ansprüche, **dadurch gekennzeichnet, dass** der Körper und/oder die Mittel zum aufnehmen und abstützen des Wischblatts (11a) wenigstens ein Element (56) zur Begrenzung des Verdrehwinkels zwischen Wischerarm (11) und Wischblatt (11a) aufweist.

## Claims

1. Connecting piece (10) for connecting a wiper blade (11a) to a wiper arm (11), having a body in particular receiving the end of the wiper arm (11) and having means for receiving and supporting the wiper blade, with regions (38, 41, 49) being provided on the body and/or on the means for receiving and supporting the wiper blade, the said regions being formed so that they are flexible in order to compensate for the shape and/or tolerance, the connecting piece (10) being designed as a single piece and being able to be used for a multiplicity of differently dimensioned wiper arms, **characterized in that**, to achieve an autoadaptive character, at least one flexible region (38, 41, 49) is designed as a resilient tab (38).

2. Connecting piece according to Claim 1, **characterized in that** the resilient tab (38) has at least two surfaces (40a, 13) which form stops for differently dimensioned wiper arm ends (11) and can each be transferred during installation.

3. Connecting piece according to Claim 2, **characterized in that** the resilient tab (38) is supported in a folded-down position by at least one stabilizing element (58).

4. Connecting piece according to Claim 3, **characterized in that** at least one resilient tab is designed as a curved section (41).

5. Connecting piece (10) for connecting a wiper blade (11a) to a wiper arm (11), having a body in particular receiving the end of the wiper arm (11) and having means for receiving and supporting the wiper blade, with regions (38, 41, 49) being provided on the body and/or on the means for receiving and supporting the wiper blade, the said regions being formed so that they are flexible in order to compensate for the shape and/or tolerance, the connecting piece (10) being designed as a single piece and being able to be used for a multiplicity of differently dimensioned wiper arms, **characterized in that** at least one region (49) is designed as a flexible plateau (53), so that an autoadaptive character is achieved.

6. Connecting piece according to one of the preceding claims, **characterized in that** the means for receiving and supporting the wiper blade (11a) have slots (50) in such a manner that a resilient cross-sectional structure is produced which has the shape of at least one web (52).

7. Connecting piece according to Claim 1, **characterized in that** the plateau (53) defines a direction with respect to which at least one web (52) is at an angle of less than 90°.

8. Connecting piece according to one of the preceding claims, **characterized in that** the body and/or the means for receiving and supporting the wiper blade (11a) has at least one elastic excess length containing at least one protruding area (24) for locking the wiper arm (11) in place.

9. Connecting piece according to one of the preceding claims, **characterized in that** the body and/or the means for receiving and supporting the wipe blade (11a) has at least one element (56) for limiting the angle of twist between the wiper arm (11) and wiper blade (11a).

## Revendications

1. Pièce de liaison (10) pour relier un balai d'essuie-glace (11a) à un bras d'essuie-glace (11), comportant un organe recevant notamment l'extrémité du bras d'essuie-glace (11) et des moyens pour recevoir et soutenir le balai d'essuie-glace,
l'organe et/ou les moyens pour recevoir et soutenir le balai d'essuie-glace ayant des zones (38, 41, 49) souples pour compenser les formes et/ou les tolérances,
la pièce de liaison (10) étant en une seule partie et convient pour un grand nombre de bras d'essuie-glace de dimensions différentes,
**caractérisée par**
au moins une zone souple (38, 41, 49) réalisée sous la forme d'une patte élastique (38) pour être auto-adaptable.

2. Pièce de liaison selon la revendication 1,
**caractérisée en ce que**
la patte élastique (38) comporte au moins deux surfaces (40a, 13) formant des butées pour des extrémités de bras d'essuie-glace (11) de dimensions différentes et qui se transfèrent au montage.

3. Pièce de liaison selon la revendication 2,
**caractérisée en ce que**
la patte élastique (38) est soutenue par au moins un élément de stabilisation (58) en position rabattue.

4. Pièce de liaison selon la revendication 3,
**caractérisée par**
au moins une patte élastique en forme de segment courbe (41).

5. Pièce de liaison (10) pour relier un balai d'essuie-glace (11a) à un bras d'essuie-glace (11) comportant un organe recevant notamment l'extrémité du bras d'essuie-glace (11) et des moyens pour recevoir et soutenir le balai d'essuie-glace, l'organe et/ou les moyens pour recevoir et soutenir le balai d'essuie-glace ayant des zones (38, 41, 49) souples pour compenser la forme et/ou les tolérances, la pièce de liaison (10) étant en une seule partie et s'appliquant à un grand nombre de bras d'essuie-glace de dimensions différentes,
**caractérisée par**
au moins une zone (49) en forme de plateau souple (53) pour être auto-adaptable.

6. Pièce de liaison selon l'une quelconque des revendications précédentes,
**caractérisée en ce que**
les moyens pour recevoir et soutenir le balai d'essuie-glace (11a) comportent des fentes (50) pour former une structure de section élastique dont la forme correspond à au moins une entretoise (52).

7. Pièce de liaison selon la revendication 1,
**caractérisée en ce que**
le plateau (53) définit une direction par rapport à au moins une entretoise (52) avec un angle inférieur à 90°.

8. Pièce de liaison selon l'une quelconque des revendications précédentes,
**caractérisée en ce que**
le corps et/ou les moyens pour recevoir et soutenir le balai d'essuie-glace (11a) comportent au moins une partie en relief, élastique, ayant au moins un bossage (24) pour bloquer le bras d'essuie-glace (11).

9. Pièce de liaison selon l'une quelconque des revendications précédentes,
**caractérisée en ce que**
l'organe et/ou les moyens pour recevoir et soutenir le balai d'essuie-glace (11a) comportent au moins un élément (56) pour limiter l'angle de rotation entre le bras d'essuie-glace (11) et le balai d'essuie-glace (11a).
